# EUROPÄISCHE PATENTSCHRIFT

(11) **EP 1 052 503 B1**
(45) Veröffentlichungstag und Bekanntmachung des Hinweises auf die Patenterteilung: **14.11.2007**
(21) Anmeldenummer: 00109425.9
(22) Anmeldetag: 03.05.2000
(51) Int. Cl.: G01N 27/407

(54) **Gassensor mit diffusions-limitierender Schicht**
Gassensor with a diffusion limiting layer
Capteur de gaz avec une couche limitant la diffusion

(30) Priorität: 11.05.1999 DE 19921532
(43) Veröffentlichungstag der Anmeldung: 15.11.2000
(73) Patentinhaber: J. Dittrich Elektronic GmbH & Co.KG,, 76532 Baden-Baden (DE)
(72) Erfinder: Guth, Ulrich, Prof. Dr., 17493 Greifswald (DE); Roth, Barbara, 17491 Greifswald (DE); Sandow, Klaus Peter, 3390 Sint-Joris-Winge (BE); Adolf, Frank, 17491 Greifswald (DE); Treichel, Matthias, 46535 Dinslaken (DE)
(74) Vertreter: Haber, Jan Wilhelm

(56) Entgegenhaltungen:
- DE-A- 4 442 272
- DE-A- 19 652 968
- US-A- 4 300 990
- US-A- 5 580 433

## Beschreibung

Die Erfindung betrifft einen Gassensor mit mindestens je zwei Meßelektroden auf einer Oberseite und mindestens einer den Meßelektroden zugeordneten Gegenelektrode auf einer Unterseite eines ionenleitenden Festelektrolyten, wobei die dem ionenleitenden Festelektrolyten abgewandte Seite der Meßelektroden mit einer diffusions-limitierenden Schicht bedeckt ist und die dem ionenleitenden Festelektrolyten abgewandte Seite der diffusions-limitierenden Schicht mit einer geschlossenen, gasdichten Schicht abgedeckt ist. Dabei bezeichnen die Begriffe "Oberseite" und "Unterseite" nur die Seiten des ionenleitenden Festelektrolyten, die die Meßelektroden oder Gegenelektroden tragen, aber nicht deren räumliche Anordnung im Hinblick auf "oben" oder "unten".

Es ist bekannt, die Gaskomponenten einer Gasmischung in-situ mit Hilfe von ionenleitenden Festelektrolyten und mehreren Elektroden zu bestimmen. So beschreiben die Schriften WO 95/30146, EP 0 807 818 A2, DE 4 442 272 A1, DE 3 728 618, DE 4 439 901.4-52 und DE 19 652 968 Vorrichtungen und Verfahren zur Bestimmung von verschiedenen Gaskomponenten in Gasgemischen, wobei allen die Verwendung eines ionenleitenden Festelektrolyten als Träger für die unterschiedlichsten Elektrodenanordnungen zugrunde liegt. Der Gaszutritt zu den Meßelektroden eines solchen Gassensors wird dabei durch eine Diffusionsbarriere ermöglicht, die aus einer Schicht porösen Materials oder aus einem gasdichten Material mit einer genau definierten Öffnung gebildet ist. Die Unterschiede liegen vor allem in der geometrischen Anordnung, der Gestaltung der Diffusionsbarriere und der daraus resultierenden gezielten Heranführung der Gasmischung an die Elektroden sowie im Herstellungsverfahren. So zeigt beispielsweise die DE 3 728 618 Grenzstromsensoren auf, deren Diffusionsbarriere als Kanal ausgebildet ist. Nachteilig ist, daß sich bei dieser Anordnung leicht Verunreinigungen absetzen können und damit die Diffusionsgeometrie und die Sensorkennlinie verändert werden.

In der Offenlegungsschrift DE 4 439 901.4-52 wird eine Zweielektroden-Anordnung beschrieben, bei der eine Elektrode mit einer für Stickoxide undurchlässigen Beschichtung versehen ist und als Pumpelektrode betrieben wird. Über den Pumpstrom wird der Sauerstoffpartialdruck bestimmt. Eine weitere Elektrode wird zur Detektion der Stickoxid-Konzentration verwendet. Bei dieser Anordnung erweist sich die Realisierung des Diffusionskanals, der verhältnismäßig große Reaktionsraum und der komplizierte Aufbau der beschichteten Pumpelektrode als nachteilig.

Eine in den Grundzügen ähnliche, jedoch verbesserte Ausführungsform zeigt die DE 19 652 968 auf. Veränderungen sind bei der Elektrodengeometrie und der Beschichtung der Pumpelektrode zu erkennen, die nun eine Sauerstoffionen-leitende Schicht aufweist. Die für die DE 4 439 901.4-52 beschriebenen Nachteile wurden jedoch nicht beseitigt.

In der DE 4 442 272 A1 wird ein rohrförmiger oder planarer Gassensor mit einem ionenleitenden Festelektrolytmaterial und drei in Diffusionsrichtung aufeinander folgenden Elektrodenpaaren beschrieben, der den Nachweis verschiedener Gase ermöglicht. Die Anordnungen weisen einen Gaszutritt von einer Seite über eine Kapillare oder eine poröse Diffusionsschicht auf. Mit Hilfe der Elektrode, die sich direkt hinter der Kapillare oder porösen Diffusionsschicht befindet, wird Sauerstoff aus dem Kanal entfernt. Die nachfolgend angeordneten Elektroden werden je nach verwendetem Elektrodenmaterial und angelegtem Reaktionspotential zur Bestimmung weiterer Gase im verbleibenden, Sauerstoff-losen Restgas verwendet. Der Hauptnachteil dieser Anordnung ist in der Ausführung des Diffusionskanals zu sehen. Seine Herstellung bedarf eines zusätzlichen, kostenintensiven Fertigungsschrittes und aufgrund seiner geringe Größe ist er anfällig für Verschmutzung. Zudem ist an den inneren Elektroden die verfügbare Menge an verbleibenden Restgas sehr klein, so daß das Meßsignal nur schwach und relativ ungenau ausgebildet ist.

Eine Verschmutzung kann zwar bei Gassensoren mit einem Schichtaufbau aus abwechselnd Elektroden und Festelektrolytschichten vermieden werden, aber die aufwendige Herstellung mit mehreren Brennprozessen ist kostenintensiv. Nachteilig erweist sich dabei auch der Kontakt der verschiedenen Materialien bei hohen Temperaturen, der zu einer Veränderung der Transportgeometrie und der Elektrodenkinetik führen kann und eine ständige Kalibration des Gassensors erforderlich macht.

Der Erfindung liegt daher die Aufgabe zugrunde, einen verbesserten Gassensor in Planartechnik zur Bestimmung verschiedener Gase aus einem Gasgemisch bereitzustellen.

Die Aufgabe wird erfindungsgemäß dadurch gelöst, daß eine innere Meßelektrode von mindestens einer äußeren Meßelektrode beabstandet umgeben ist, daß der äußere Umfang der äußersten Meßelektrode mit der diffusions-limitierenden Schicht abgedeckt ist und daß ein Gaszutritt zu den Meßelektroden zwischen dem ionenleitenden Festelektrolyten und der geschlossenen, gasdichten Schicht im Bereich eines äußeren Umfangs der äußersten Meßelektrode über die diffusions-limitierende Schicht erfolgt. Dabei kennzeichnet das Wort "umgeben" ein Umschließen in einer Raumebene. Der Gaszutritt zu der äußersten Meßelektrode erfolgt nicht kanal- oder schlauchartig nur von einer Seite. Vielmehr erfolgt der Gaszutritt über die diffusions-limitierende Schicht je nach geometrischer Ausgestaltung der Elektrodenfläche der äußersten Meßelektrode zu dieser äußersten Meßelektrode nahezu allseitig. Die Gasmenge, die aufgrund dieser Anordnung eindiffundieren kann, ist im Vergleich zu bestehenden Anordnungen ungleich größer. Die Elektrodenflächen können beliebig so groß gestaltet werden, daß die höhere Gasmenge verarbeitet werden kann. Höhere Gasmengen an den einzelnen Meßelektroden haben den positiven Effekt, daß hohe Meßsignale und Meßgenauigkeiten resultieren. Die Gegenelektroden können sich entweder im Meßgas oder aber in einem speziellen Referenzgas befinden. Eine Gegenelektrode kann als Bezugselektrode für mehrere Meßelektroden dienen. Die Anzahl der Gegenelektroden kann aber auch gleich der Anzahl der Meßelektroden sein. Besonders vorteilhaft ist es, wenn die Gegenelektroden auf der Unterseite des ionenleitenden Festelektrolyten als eine senkrechte Projektion der Meßelektroden ausgebildet sind. Demnach können die Gegenelektroden in Form und Größe identisch den Meßelektroden sein.

Die geschlossene, gasdichte Schicht wird durch ein Trägersubstrat und/oder einen gasdichten Film gebildet. Wird ein Trägersubstrat verwendet, so muß der ionenleitende Festelektrolyt keine selbsttragenden Eigenschaften aufweisen. Wird alleinig ein gasdichter Film zur Bildung der geschlossenen, gasdichten Schicht verwendet, so kann eine andere Schichtebene wie beispielsweise der ionenleitende Festelektrolyt die selbsttragenden Eigenschaften aufweisen.

Bei der Verwendung von Dünn- oder Dickschichttechnik zur Herstellung des Gassensors kann der sich zwischen den Meßelektroden vorliegende Diffusionsspalt mit der diffusions-limitierenden Schicht gefüllt sein. Werden die Schichten dagegen laminiert, so kann dieser Diffusionsspalt auch frei sein.

Vorteilhaft ist es, wenn die äußerste Meßelektrode und deren Gegenelektrode ein amperometrisches Meßsignal liefern und die Meß- und Gegenelektroden innerhalb der äußersten Meßelektrode und deren Gegenelektrode ein potentiometrisches Meßsignal liefern, das heißt es wird amperometrisch oder potentiometrisch gemessen. Als besonders vorteilhaft hat es sich aber erwiesen, wenn das Meßsignal an der äußersten Meßelektrode und deren Gegenelektrode durch elektrochemische Umsetzung und Herauspumpen von Sauerstoff aus einem Meßgas gebildet ist. Die äußerste Meßelektrode wirkt demnach als Pumpelektrode und entzieht dem Meßgasgemisch Sauerstoff. An den Meß- und Gegenelektroden innerhalb der äußersten Meßelektrode und deren Gegenelektrode können dann nacheinander in einfacher Weise weitere in dem verbleibenden Restgas enthaltene Gaskomponenten bestimmt werden. So können dort beispielsweise Gaskomponenten wie Kohlenwasserstoffe (CHx) und/oder Stickoxide (NOx) bestimmt werden.

Idealerweise ist bei dem Gassensor die innere Meßelektrode als Kreisfläche ausgebildet und mindestens eine äußere Meßelektrode umgibt zumindest teilweise konzentrisch die innere Meßelektrode beabstandet. Möglich ist es auch, daß die äußeren Meßelektroden die innere Meßelektrode vollständig konzentrisch umgeben und zwischen einer Kontaktbahn zur Kontaktierung einer Meßelektrode und weiteren, diese Kontaktbahn kreuzenden Meßelektroden eine elektrisch isolierende, gasdichte Schicht angeordnet ist.

Die konzentrische Anordnung ermöglicht eine optimale Ausgestaltung des Diffusionsspalts, da der sich hier zwischen den Meßelektroden bildende Diffusionsspalt über seine Länge eine konstante Breite aufweist. Vorteilhaft ist es auch, ein Heizelement auf dem Gassensor zu plazieren, das die Temperatur konstant hält. So können die Gegenelektroden mit einer elektrisch isolierenden, porösen Schicht bedeckt sein, auf der ein elektrisches Heizelement angeordnet ist.

Nachfolgende Figuren zeigen vorteilhafte Ausgestaltungen der Erfindung.
Fig. 1 bis 4: Mögliche Ausgestaltungen der inneren und äußeren Meßelektroden
Fig. 5: Gassensor mit selbst-tragendem Festelektrolyten in Aufsicht
Fig. 6: Gassensor aus Fig. 5 (Schnittbild) mit zusätzlichem Heizelement
Fig. 7: Gassensor mit Festelektrolyt in Schichtform
Fig. 8: Gassensor aus Fig. 7 (Schnittbild) mit zusätzlichem Heizelement

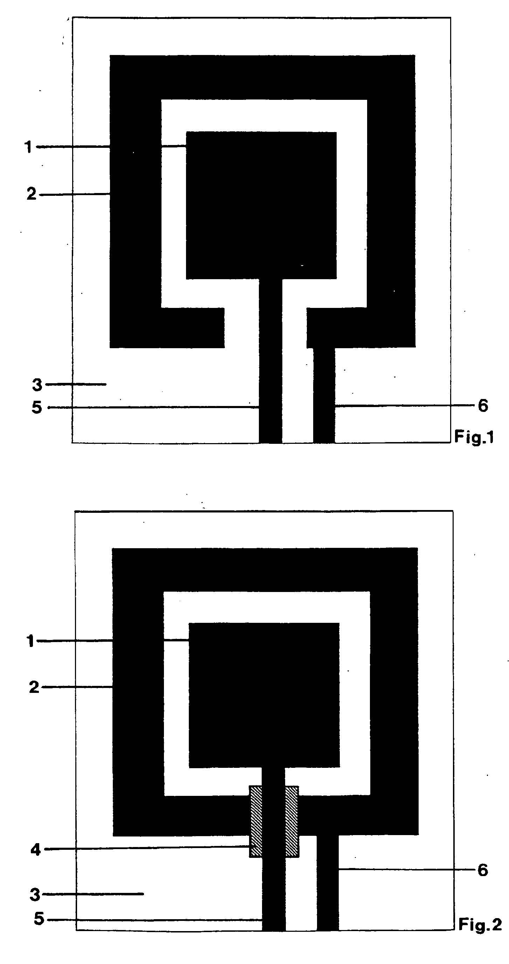

Fig. 1 zeigt eine mögliche Anordnung und Ausgestaltung der inneren Meßelektrode 1 und einer äußeren Meßelektrode 2 auf einem Träger 3. Die innere Meßelektrode 1 ist in Form einer quadratischen Fläche auf den Träger 3 aufgebracht. Aber auch beliebige andere Formen wie Dreieck, Kreis oder unregelmäßige Formen sind für die innere Meßelektrode 1 möglich. Die äußere Meßelektrode 2, die hier von keiner weiteren äußeren Meßelektrode umgeben ist und damit nur in diesem Fall gleichzeitig auch die äußerste Meßelektrode darstellt, umgibt die innere Meßelektrode 1. Eine Öffnung in der äußeren Meßelektrode 2 ermöglicht die Kontaktierung der inneren Meßelektrode 1 mit Hilfe der Kontaktbahn 5. Die Kontaktierung der äußeren Meßelektrode 2 erfolgt mit der Kontaktbahn 6. Der Träger 3 kann ein selbst-tragendes Festelektrolyt-Plättchen oder aber ein vorbehandeltes, beschichtetes Trägersubstrat aus Keramik sein. Übliche Trägersubstrate sind beispielsweise aus Aluminiumoxid hergestellt. Als Festelektrolyt kommen Sauerstoffionen-leitende Materialien wie beispielsweise dotiertes ZrO₂, CeO₂, HfO₂ oder LaGaO₃ in Frage.

Fig. 2 zeigt eine weitere, mögliche Ausgestaltung der äußeren Meßelektrode 2, bei der die innere Meßelektrode 1 vollständig umgeben ist. Um einen elektrischen Kontakt zwischen Kontaktbahnen und äußeren Meßelektroden zu verhindern, sind isolierende, gasdichte Schichten erforderlich. Hier ist die isolierende, gasdichte Schichte 4 zwischen der Kontaktbahn 5 und der äußeren Meßelektrode 2 angeordnet. Dabei kann auch umgekehrt zur Darstellung in Fig. 2 zuerst die Kontaktbahn 5, anschließend die isolierende, gasdichte Schicht 4 und zuletzt die äußere Meßelektrode 2 angeordnet sein. Bei mehreren äußeren Meßelektroden ist eine breitere und längere isolierende, gasdichte Schicht oder es sind mehrere isolierende, gasdichte Schichten erforderlich.

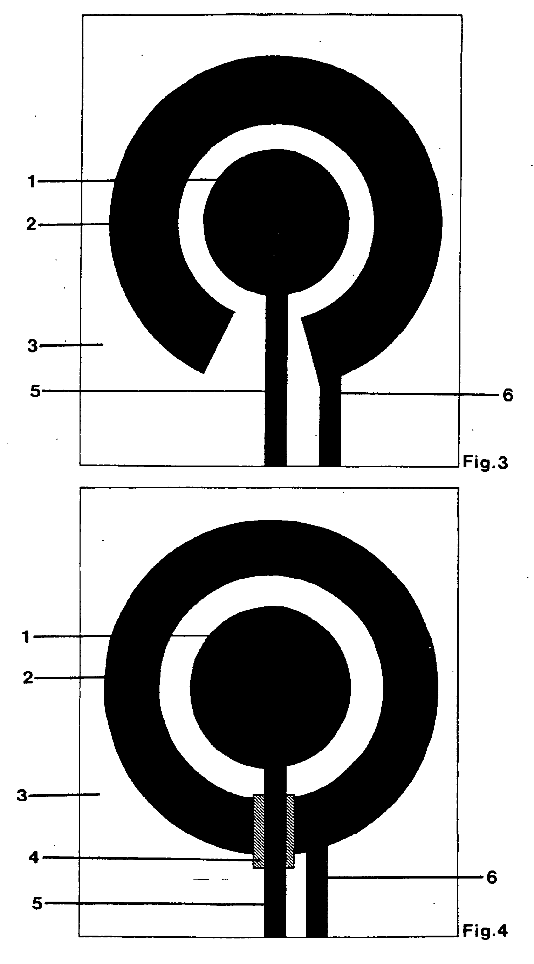

Fig. 3 zeigt als vorteilhafte Ausgestaltung der Meßelektroden eine kreisförmige innere Meßelektrode 1 und eine konzentrische äußere Meßelektrode 2. Der sich zwischen dem äußeren Umfang der inneren Meßelektrode 1 und dem inneren Umfang der äußeren Meßelektrode 2 bildende Diffusionsspalt weist dabei eine konstante Breite auf und ermöglicht einem eindiffundierenden Meßgas das zeitgleiche Erreichen der inneren Meßelektrode 1, nachdem die äußere Meßelektrode 2 überwunden wurde. Besonders vorteilhaft ist es auch, wenn die äußeren Abmaße des Trägers 3 dem äußerem Umfang der äußersten Meßelektrode 2 angepasst sind, um den Diffusionsweg eines Meßgases zum äußeren Umfang der äußersten Meßelektrode allseitig gleich groß zu gestalten. Diese mögliche Ausgestaltung ist hier nicht dargestellt.

Fig. 4 zeigt eine kreisförmige innere Meßelektrode 1 und eine diese innere Meßelektrode 1 vollständig umgebende konzentrische äußere Meßelektrode 2. Die Kontaktbahn 5 ist durch die isolierende, gasdichte Schicht 4 von der äußeren Meßelektrode 2 getrennt.

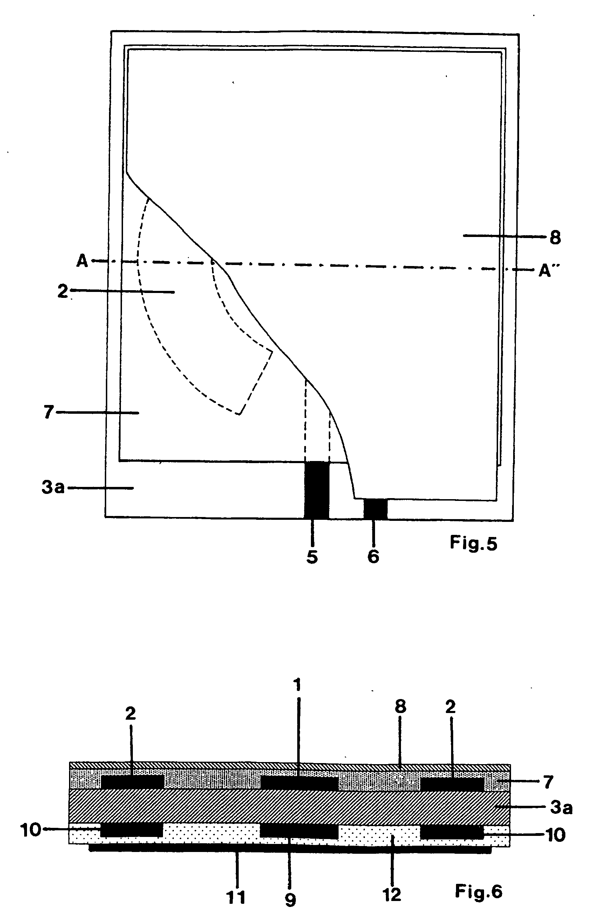

Fig. 5 zeigt ein Beispiel für eine Aufsicht auf die Seite der Meßelektroden eines erfindungsgemäßen Gassensors. Als Träger 3a ist hier das Sauerstoffionen-leitende Festelektrolytmaterial ZrO₂ in Form eines selbst-tragenden Plättchens verwendet. Die Meßelektroden 1; 2 sind von der diffusions-limitierenden Schicht 7 bedeckt. Dabei ist es erforderlich, daß der äußere Umfang der äußersten Meßelektrode 2 bedeckt ist und alle Meßelektroden von einer geschlossenen Schicht der diffusions-limitierenden Schicht 7 überdeckt sind. Die Lage der unter der diffusions-limitierenden Schicht 7 liegenden Teile der Meßelektroden ist mit gestrichelten Linien angedeutet. Die diffusions-limitierende Schicht 7 ist mit einer gasdichten Schicht 8 bedeckt. In diesem Beispiel ist die Anordnung der Meßelektroden wie in Fig. 3 gewählt. An der Seite, an der die Kontaktbahnen 5; 6 angeordnet sind, muß die gasdichte Schicht 8 hier auch die Kante der diffusions-limitierenden Schicht 7 bedecken. So kann das Meßgas die äußerste Meßelektrode 2 kaum umgehen, wenn die diffusions-limitierende Schicht 7 sich außerhalb der äußersten Meßelektrode 2 nur so weit erstreckt, daß der äußerste Umfang der äußersten Meßelektrode 2 überdeckt ist. An den drei verbleibenden Seiten darf die gasdichte Schicht 8 die Kanten der diffusions-limitierenden Schicht 7 nicht bedecken, damit hier das Meßgas eindringen und in Richtung der äußersten Meßelektrode 2 diffundieren kann.

Fig. 6 zeigt einen Schnitt A - A'' durch den Gassensor aus Fig. 5. Als Träger 3a ist das Festelektrolyt-Plättchen angeordnet, das die Meßelektroden 1; 2 und die Gegenelektroden 9; 10 trägt. Die Gegenelektroden 9; 10 sind in diesem Beispiel eine senkrecht Projektion der Meßelektroden 1; 2. Es ist aber auch möglich, daß nur eine einzige Gegenelektrode verwendet wird. Die Meßelektroden 1; 2 sind von der diffusions-limitierenden Schicht 7 bedeckt. Bei Verwendung der Laminat-Technik kann zwischen den Meßelektroden 1; 2 ein freier Raum ausgebildet werden, der die Höhe der Meßelektroden aufweist. Die diffusions-limitierende Schicht 7 ist von der gasdichten Schicht 8 begrenzt. Um auf der Seite der Gegenelektroden 9; 10 zusätzlich ein Heizelement 11 aufbringen zu können, sind die Gegenelektroden 9; 10 von der porösen, elektrisch isolierenden Schicht 12 bedeckt, die das Heizelement 11 trägt. Das Heizelement 11 kann, wie hier vorgesehen, mäander-förmig ausgestaltet sein.

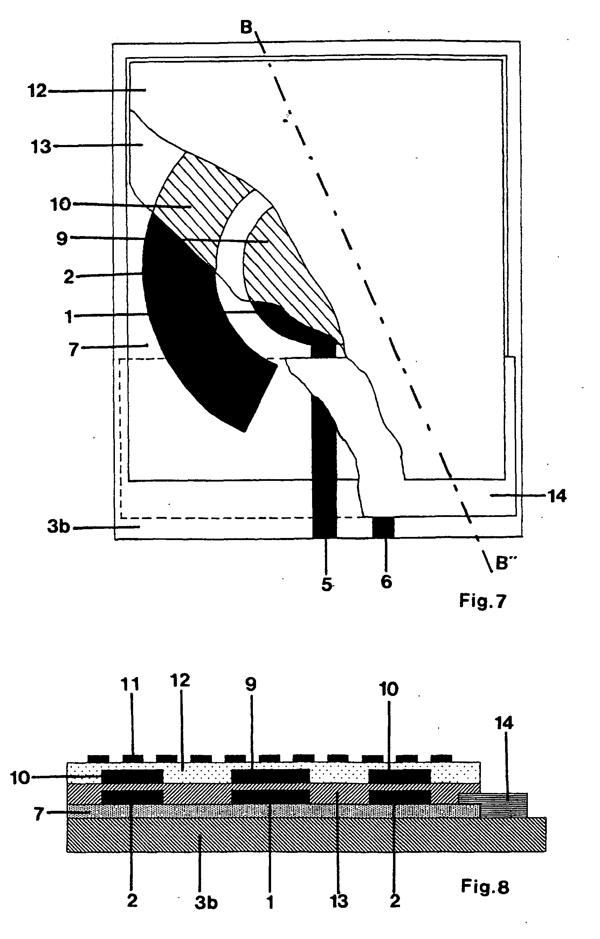

Fig. 7 zeigt eine weitere mögliche Ausgestaltung des Gassensors, bei der ein Träger 3b aus einem Keramiksubstrat, beispielsweise aus Al₂O₃, den Schichtaufbau trägt. Der Träger 3b ist mit der diffusions-limitierenden Schicht 7 bedeckt, auf welcher die Meßelektroden 1; 2 angeordnet sind. Da auch hier die Anordnung der Meßelektroden wie in Fig. 3 gewählt ist, wird die Seite und die Kante der diffusions-limitierenden Schicht 7, an der die Kontaktbahnen 5; 6 weggeführt werden, mit einer gasdichten, isolierenden Schicht 14 begrenzt. Zweckmäßige Ausmaße der Schicht 14 sind mit gestrichelter Linie ergänzt. Auch die elektrische Isolation der Kontaktbahnen der Meßelektroden gegenüber den Kontaktbahnen der Gegenelektroden kann mit Hilfe dieser gasdichten, isolierenden Schicht 14 erfolgen. Die Meßelektroden 1; 2 und Teile der diffusions-limitierenden Schicht 7 werden von einer Schicht 13 aus Festelektrolytmaterial, beispielsweise ZrO₂, bedeckt. Die Randbezirke der diffusions-limitierenden Schicht 7 bleiben an drei Seiten frei, um den Gaszutritt zu ermöglichen. Die Schicht 13 aus Festlektrolytmaterial trägt direkt über den Meßelektroden 1; 2 die Gegenelektroden 9; 10 in schraffierter Darstellung. Fig. 7 zeigt auch die poröse, isolierende Schicht 12, die als Untergrund für ein nur in Fig. 8 dargestelltes Heizelement dient.

Fig. 8 zeigt einen Schnitt B - B'' des Gassensors aus Fig. 7 mit einem zusätzlichen, mäander-förmigen Heizelement 11 auf der porösen, isolierenden Schicht 12.

## Patentansprüche

1. Gassensor mit mindestens je zwei Messelektroden (1, 2) auf einer Oberseite und mindestens einer den Messelektroden zugeordneten Gegenelektrode (9, 10) auf einer Unterseite eines ionenleitenden Festelektrolyten, wobei die dem ionenleitenden Festelektrolyten (3a, 13) abgewandte Seite der Messelektroden (1, 2) mit einer diffusions-limitierenden Schicht (7) bedeckt ist und die dem ionenleitenden Festelektrolyten (3a, 13) abgewandte Seite der diffusions-limitierenden Schicht (7) mit einer geschlossenen gasdichten Schicht (3b, 8) abgedeckt ist,
**dadurch gekennzeichnet, dass**
eine innere Messelektrode (1) der Messelektroden (1, 2) von mindestens einer äußeren Messelektrode (2) der Messelektroden (1, 2) in einer Raumebene beabstandet umgeben ist, dass der äußere Umfang einer äußersten Messelektrode (2) der Messelektroden (1, 2) mit der diffusions-limitierenden Schicht (7) abgedeckt ist und dass ein Gaszutritt zu den Messelektroden (1, 2) zwischen dem ionenleitenden Festelektrolyten (3a, 13) und der geschlossenen, gasdichten Schicht (3b, 8) im Bereich eines äußeren Umfangs der äußersten Messelektrode (2) über die diffusions-limitierende Schicht (7) erfolgt.

2. Gassensor nach Anspruch 1, **dadurch gekennzeichnet, dass** die Anzahl der Gegenelektroden (9, 10) gleich der Anzahl der Messelektroden (1, 2) ist.

3. Gassensor nach Anspruch 2, **dadurch gekennzeichnet, dass** die Gegenelektroden (9; 10) auf der Unterseite des ionenleitenden Festelektrolyten (3a, 13) als eine senkrechte Projektion der Messelektroden (1, 2) bezüglich der Ebene des ionenleitenden Festelektrolyten (3a, 13) ausgebildet sind.

4. Gassensor nach einem der Ansprüche 1 bis 3, **dadurch gekennzeichnet, dass** die geschlossene, gasdichte Schicht (3b, 8) durch ein Trägersubstrat (3b) und/oder einen gasdichten Film (8) gebildet ist.

5. Gassensor nach einem der Ansprüche 1 bis 4, **dadurch gekennzeichnet, dass** ein sich zwischen den Messelektroden (1, 2) bildender Diffusionsspalt mit der diffusions-limitierenden Schicht (7) gefüllt ist.

6. Gassensor nach einem der Ansprüche 1 bis 5, **dadurch gekennzeichnet, dass** die innere Messelektrode (1) als Kreisfläche ausgebildet ist und die mindestens eine äußere Messelektrode (2) zumindest teilweise konzentrisch die innere Messelektrode (1) beabstandet umgibt.

7. Gassensor nach einem der Ansprüche 1 bis 6, **dadurch gekennzeichnet, dass** die mindestens eine äußere Messelektrode (2) die innere Messelektrode (1) vollständig konzentrisch umgibt und zwischen einer Kontaktbahn (5) zur Kontaktierung einer Messelektrode und weiteren, diese Kontaktbahn kreuzenden Messelektroden (2) eine elektrisch isolierende, gasdichte Schicht (4) angeordnet ist.

8. Gassensor nach einem der Ansprüche 1 bis 7, **dadurch gekennzeichnet, dass** der sich zwischen den Messelektroden (1,2) bildende Diffusionsspalt über seine Länge eine konstante Breite aufweist.

9. Gassensor nach einem der Ansprüche 1 bis 8, **dadurch gekennzeichnet, dass** die mindestens eine Gegenelektrode (9, 10) mit einer elektrisch isolierenden, porösen Schicht (12) bedeckt sind ist und auf dieser ein elektrisches Heizelement (11) angeordnet ist.

## Claims

1. A gas sensor with at least two respective measuring electrodes (1, 2) on an upper side of an ion-conducting solid electrolyte and at least one counter electrode (9, 10) that is assigned to the measuring electrodes and arranged on the lower side of the ion-conducting solid electrolyte, wherein the side of the measuring electrodes (1, 2) that faces away from the ion-conducting solid electrolyte (3a, 13) is covered with a diffusion-limiting layer (7) and the side of the diffusion-limiting layer (7) that faces away from the ion-conducting solid electrolyte (3a, 13) is covered with a closed gas-tight layer (3b, 8),
**characterized in that**
an inner measuring electrode (1) of the measuring electrodes (1, 2) is surrounded by and spaced apart from at least one outer measuring electrode (2) of the measuring electrodes (1, 2) in a spatial plane, **in that** the outer periphery of an outer measuring electrode (2) of the measuring electrodes (1, 2) is covered with the diffusion-limiting layer (7), and **in that** gas is admitted to the measuring electrodes (1, 2) between the ion-conducting solid electrolyte (3a, 13) and the closed gas-tight layer (3b, 8) via the diffusion-limiting layer (7) in the region of the outer periphery of the outermost measuring electrode (2).

2. The gas sensor according to Claim 1, **characterized in that** the number of counter electrodes (9, 10) is identical to the number of measuring electrodes (1, 2).

3. The gas sensor according to Claim 2, **characterized in that** the counter electrodes (9, 10) on the lower side of the ion-conducting solid electrolyte (3a, 13) are realized in the form of a vertical projection of the measuring electrodes (1, 2) referred to the plane of the ion-conducting solid electrolyte (3a, 13).

4. The gas sensor according to one of Claims 1 to 3, **characterized in that** the closed gas-tight layer (3b, 8) is formed by a carrier substrate (3b) and/or a gas-tight film (8).

5. The gas sensor according to one of Claims 1 to 4, **characterized in that** a diffusion gap forming between the measuring electrodes (1, 2) is filled with the diffusion-limiting layer (7).

6. The gas sensor according to one of Claims 1 to 5, **characterized in that** the inner measuring electrode (1) is realized in the form of a circular surface and the at least one outer measuring electrode (2) surrounds and is spaced apart from the inner measuring electrode (1) in an at least partially concentric fashion.

7. The gas sensor according to one of Claims 1 to 6, **characterized in that** the at least one outer measuring electrode (2) surrounds the inner measuring electrode (1) in a completely concentric fashion, and **in that** an electrically insulating gas-tight layer (4) is arranged between a contact deck (5) for contacting a measuring electrode and other measuring electrodes (2) that intersect this contact deck.

8. The gas sensor according to one of Claims 1 to 7, **characterized in that** the diffusion gap forming between the measuring electrodes (1, 2) has a constant width over its length.

9. The gas sensor according to one of Claims 1 to 8, **characterized in that** the at least one counter electrode (9, 10) is covered with an electrically insulating porous layer (12) and an electric heating element (11) is arranged on this porous layer.

## Revendications

1. Capteur de gaz comportant au moins deux électrodes de mesure (1, 2) sur une face supérieure et une électrode conjuguée (9, 10) associée à au moins une des électrodes de mesure sur une face inférieure d'un électrolyte solide conducteur ionique, dans lequel le côté détourné de l'électrolyte solide conducteur ionique (3a, 13) des électrodes de mesure (1, 2) est recouvert d'une couche limitant la diffusion (7) et le côté détourné de l'électrolyte solide conducteur ionique (3a, 13) de la couche limitant la diffusion (7) est recouvert d'une couche fermée étanche au gaz (3b, 8),
**caractérisé en ce que**
une électrode de mesure interne (1) parmi les électrodes de mesure (1, 2) est entourée à distance dans un plan spatial par au moins une électrode de mesure externe (2) parmi les électrodes de mesure (1, 2), que la circonférence extérieure d'une électrode de mesure (2) placée le plus à l'extérieur est recouverte par la couche limitant la diffusion (7) et qu'un accès de gaz vers les électrodes de mesure (1, 2) a lieu entre l'électrolyte solide conducteur ionique (3a, 13) et la couche fermée étanche au gaz (3b, 8) au niveau d'une circonférence extérieure de l'électrode de mesure (2) placée le plus à l'extérieur par l'intermédiaire de la couche limitant la diffusion (7).

2. Capteur de gaz selon la revendication 1, **caractérisé en ce que** le nombre d'électrodes conjuguées (9, 10) est égal au nombre d'électrodes de mesure (1, 2).

3. Capteur de gaz selon la revendication 2, **caractérisé en ce que** les électrodes conjuguées (9, 10) sont réalisées sur la face inférieure de l'électrolyte solide conducteur ionique (3a, 13) sous forme d'une projection verticale des électrodes de mesure (1, 2) par rapport au plan de l'électrolyte solide conducteur ionique (3a, 13).

4. Capteur de gaz selon une des revendications 1 à 3, **caractérisé en ce que** la couche fermée étanche au gaz (3b, 8) est constituée par un substrat porteur (3b) et/ou un film étanche au gaz (8).

5. Capteur de gaz selon une des revendications 1 à 4, **caractérisé en ce qu'**une fente de diffusion se formant entre les électrodes de mesure (1, 2) est comblée par la couche limitant la diffusion (7).

6. Capteur de gaz selon une des revendications 1 à 5, **caractérisé en ce que** l'électrode de mesure interne (1) est réalisée sous forme d'une surface circulaire et que l'au moins une électrode de mesure extérieure (2) entoure du moins partiellement concentriquement à distance l'électrode de mesure interne (1).

7. Capteur de gaz selon une des revendications 1 à 6, **caractérisé en ce que** l'au moins une électrode de mesure extérieure (2) entoure totalement concentriquement l'électrode de mesure interne (1) et qu'entre une bande de contact (5) permettant le contact entre une électrode de mesure et d'autres électrodes de mesure croisant cette bande de contact (2), une couche électriquement isolante et étanche au gaz (4) est disposée.

8. Capteur de gaz selon une des revendications 1 à 7, **caractérisé en ce que** la fente de diffusion se formant entre les électrodes de mesure (1, 2) présente une largeur constante sur toute sa longueur.

9. Capteur de gaz selon une des revendications 1 à 8, **caractérisé en ce que** l'au moins une électrode conjuguée (9, 10) est recouverte d'une couche poreuse électriquement isolante (12) et qu'un élément chauffant électrique (11) est disposée sur celle-ci.
